(19) Europäisches Patentamt

European Patent Office

Office européen des brevets

(11) **EP 1 137 552 B1**

(12) **EUROPEAN PATENT SPECIFICATION**

(45) Date of publication and mention
of the grant of the patent:
**18.06.2003   Bulletin 2003/25**

(21) Application number: **99956186.3**

(22) Date of filing: **24.11.1999**

(51) Int Cl.⁷: **B60K 31/04**, B60K 31/18

(86) International application number:
**PCT/GB99/03895**

(87) International publication number:
**WO 00/032435 (08.06.2000 Gazette 2000/23)**

(54) **CRUISE CONTROL SYSTEM COMPRISING A DESIRED CRUISE CONTROL SPEED AND A VEHICLE SPEED DISPLAY**

FAHRGESCHWINDIGKEITSREGLER MIT EINER FAHRGESCHWINDIGKEITS- SOLL- UND IST-ANZEIGE

SYSTEME REGULATEUR DE VITESSE AVEC AFFICHAGE DE VITESSE CHOISIE ET VITESSE DE VEHICULE

(84) Designated Contracting States:
**DE FR GB**

(30) Priority:   **03.12.1998   GB 9826577**

(43) Date of publication of application:
**04.10.2001   Bulletin 2001/40**

(73) Proprietor: **Ford Global Technologies, Inc.
Dearborn, Michigan 48126 (US)**

(72) Inventors:
• **RICHARDSON, Michael, Julian
Worcestershire B97 2SG (GB)**
• **HANEY, Paul, Robert
Warwickshire CV22 6HZ (GB)**
• **BLAKE, Ian, Philip
Coventry CV7 7PZ (GB)**

(74) Representative: **Messulam, Alec Moses
A. Messulam & Co. Ltd.,
43-45 High Road
Bushey Heath, Bushey, Herts WD23 1EE (GB)**

(56) References cited:
WO-A-99/37498          DE-A- 19 620 467
DE-C- 19 646 104

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Background of the Invention

(1) Field of the Invention

The invention relates to a cruise control system in which the cruise control speed set by the driver is displayed digitally to the driver.

(2) Description of the Prior Art

Most traditional cruise control systems have not displayed the set speed at which the driver wishes the vehicle's speed to be fixed, because of potential discrepancies between the speed shown on the speedometer and the set speed. Also there is limited benefit in displaying the driver's intended cruise speed as the vehicle operates near the set speed except where resuming.

In adaptive or intelligent cruise control systems, there is a demand for the cruise control set speed to be displayed to the driver. For example, when a vehicle has a radar-based "Follow" mode in which a minimum vehicle separation to a leading vehicle is maintained, then the vehicle speed may be controlled at a speed below the set speed for some time. If the leading vehicle is no longer in front, or if it speeds up, then an automatic resume to the set cruise control speed may take the driver by surprise. The driver may have forgotten the set cruise control speed, or this speed may no longer be appropriate to the road conditions. If the set cruise control speed is displayed, then the driver will not be taken by surprise, and if the conditions change while he is in 'Follow' mode, he can alter the set speed accordingly.

However, this leads to the speedometer discrepancy problem. This occurs where the driver has selected a cruising speed that is displayed to the driver on a digital display of the cruise controller, but the cruising speed attained, and that shown on the speedometer do not match.

One reason for this is the difference in resolution between a digital display and an analogue speedometer. For instance the set speed could be 54.5 km/h displayed on the speedometer, but this is generally shown as an integral value on the digital display, either 54 or 55 km/h.

Closest prior art document DE 196 46 104 C1 discloses a cruise control system for a vehicle, coupled to an engine management system of the vehicle operable to alter the speed of the vehicle dependant upon input from the cruise control system. The cruise control system comprises means for generating a measure of the vehicle speed and means by which a driver of the vehicle may set a desired cruise control speed. Further, it comprises a cruise control digital display for displaying to the driver a display equivalent of the desired cruise control speed that is rounded according to a speed increment value. A speedometer display provides to the driver a display equivalent of the measure of the vehicle speed. The display equivalent of a speed including a speed offset value is summed with the measure of the vehicle speed. The cruise control system adjusts the desired cruise control speed to an adjusted cruise control speed in order to reduce any discrepancy in the display equivalent speeds. The adjusted cruise control speed is calculated by adding the offset to the measure of the vehicle speed.

For convenience, the examples described herein use speeds given in the metric units km/h. The English units mph could equally well be used with the same numerical values.

Whichever units are used, problems also arise due to scaling and correction factors introduced into the cruise control system and the speedometer because of legislation, and because of differences in tire size used on the vehicle.

Most countries legislate that there must be an offset "o" between the actual speed travelled and that displayed on the speedometer. In addition, the law may require a scaling factor "s", for example 1.05 so the speed displayed on the speedometer is equal to the actual speed travelled plus the offset and then multiplied by the scaling factor. Additionally the engine management system of some vehicles requires a correction due to the tire size. Usually, this is because wheel speed sensors, for example a toothed wheel in an ABS (Advanced Braking System) module, may be used on different vehicles having different tire sizes. Therefore in some vehicles, speed displayed will have also been corrected by a tire size factor "c" prior to offset and scaling corrections.

In this specification, the term "display equivalent speed" v' is the speed that is displayed to the driver by either a speedometer or a cruise control set speed display, after all such correction factors have been applied to a measure of the vehicle speed V, including any necessary rounding in the case of a non-analogue display.

Clearly, the cruise control system display must also use the same correction factors in comparing an actual vehicle speed with a desired set cruising speed. If the desired set cruising speed is to be displayed digitally to the driver, a problem arises owing to the desire to display to the driver a suitably rounded number, for example rounded to 1 km/h or 2 km/h. This is because the initially captured cruise speed is unlikely to be exactly the same as a rounded display value. For example if a driver presses a cruise control Set Speed button when an analogue needle-type vehicle speedometer display equivalent speed $v'_s$ is 59.5 km/h, a digital cruise control display equivalent speed $v'_c$ could be 60 km/h. The cruise control system will not, however, control the vehicle speed to be 60 km/h, but to the initially captured speed of 59.5 km/h, and a driver may notice from the speedometer display equivalent speed v'$_s$ that the vehicle is travelling slower than the cruise control display equivalent speed.

An equivalent problem arises in the case that the vehicle has a digital speedometer display that presents display equivalent speed values v'$_s$ that are rounded in a different way to the digital cruise control display equivalent speed values v'$_c$. Examples of digital speedometer displays include displays that present numbers to a driver, or displays that do not change smoothly, for example a linear arrangement of discrete light emitting diodes. If a digital speedometer display rounds speed values to 1 km/h while a cruise control digital set speed display rounds cruise control set speeds to 2 km/h then, all other factors being equal, there is only a 50% chance that both displays will display the same speed when the cruise control is controlling the vehicle speed to the initially captured cruise control speed.

A further complication arises if the cruise control system has a speed increment and/or a speed decrement button, because the increment or decrement may not correspond with the cruise control digital display increments. In other words, if the driver wishes to increment his set speed by a constant integral value, when corrected by the appropriate factors, this may not show on the speedometer as an integral value. Moreover, if the desired cruise control display increment is 2 km/h, only even speeds can be displayed digitally by the cruise control system.

The present invention is applicable to all cruise control systems for use in countries where there is an offset between the speed travelled and the speed displayed.

Summary of the Invention

According to the invention there is provided a cruise control system for a vehicle according to the subject-matter of claim 1. The cruise control system is coupled to an engine management system of the vehicle operable to alter the speed of the vehicle dependant upon input from the cruise control system, the cruise control system comprising: means for generating a measure V of the vehicle speed; means by which a driver of the vehicle may set a desired cruise control speed; a cruise control digital display for displaying to the driver a display equivalent v'$_c$ of the desired cruise control speed that is rounded according to a speed increment value I; a speedometer display for displaying to the driver a display equivalent v'$_s$ of the measure V of the vehicle speed; the display equivalent v' of a speed including a speed offset value O summed with the measure V of the vehicle speed; characterised in that the cruise control system adjusts if necessary the desired cruise control speed to an adjusted cruise control speed v$_a$ in order to reduce any discrepancy in the display equivalent speeds v'$_c$ and v'$_s$, the adjusted cruise control speed v$_a$

being calculated according to the following algorithm:

a) the offset O is added to the measure V of the vehicle speed, and this total is divided by the speed increment value I to express the measure of the vehicle speed as a multiple of the speed increment value;

b) said multiple is rounded according to the speed increment value I to give a rounded multiple; and

c) said rounded multiple is multiplied by the speed increment value I and the speed offset value O is subtracted.

This can be expressed algebraically as:

$$(1) \qquad v_a = I \cdot \text{Round}\{ (V + O)/I \} - O$$

In this way, any discrepancy between the digitally displayed cruise control speed and the displayed speedometer speed is minimised or eliminated.

Furthermore, if the cruise control system has a speed increment and/or decrement control which may be activated by the driver to increment and/or decrement in steps the desired cruise control speed, then the discrepancy will remain minimised or eliminated if the steps are such that the measure V of the vehicle speed is incremented and/or decremented by the speed increment value I when the desired cruise control speed is incremented and/or decremented by the driver.

In this way the error accruing by rounding the desired cruise control speed to the nearest integer or other increment value is minimised, and incrementing the vehicle cruise control speed will always be shown to be incrementing at an integer or other increment value on the digital cruise control display.

In a preferred embodiment of the invention, the measure V of the vehicle speed is a measured wheel speed value v$_w$, for example as measured in an ABS module. Such a measure would normally have to be corrected by a non-unitary and non-zero tire size correction factor c, so that true vehicle speed v$_t$ is equal to the measured wheel speed value v$_w$ multiplied by c.

The invention is, however, also applicable to other cases in which the measure V of the vehicle speed is another measure, for example a measure of the propeller shaft speed, or a radar-derived true road speed. The tire size correction factor can therefore be generalised to any such speed sensor correction factor c.

The measure V of the vehicle speed, or the true vehicle speed v$_t$, may also be scaled according to a non-unitary and non-zero speed scaling factor s. For example, it is desired for safety reasons that the speedometer speed display should read higher than true vehicle speed, then an appropriate speed scaling factor s may be chosen to be multiplied by the measure of vehicle speed V or true vehicle speed $v_t$, either before or after addition of the offset O to such speed. For example, relative to the true vehicle speed and any offset, the scaling factor may be chosen so that the display equivalent speed is increased by 5%, in which case the speed scaling factor would be 1.05.

As stated above, the invention is applicable to cases in which speed values are displayed to a driver with an offset O. Usually, the offset will be a constant value over most of the vehicle speed range. The offset may, however, be tapered to zero if the speedometer display displays speeds down to a zero speed. If the offset is not constant, then means may be provided by which an offset value for the algorithm is selected to match the offset for a particular speed range.

Because the display equivalent of a speed may be corrected according to other factors that scale linearly with speed, the invention includes the case where the display equivalent v' of any speed is equal to a constant k multiplied by a sum of the measure V of the vehicle speed and the offset value O.

Here, the constant k is in all cases a non-unitary and non-zero value.

The constant k may be the tire size correction factor c.

Alternatively, the constant k may be the speed scaling factor s.

Most generally, the constant k is the speed sensor correction factor c multiplied the speed scaling factor s.

This can be represented as:

$$(2) \qquad v' = k \cdot (V + O)$$

For purposes of calculation, when a tire correction factor c is used (or other equivalent speed sensor correction factor c, for example a correction factor for a propeller shaft speed signal) it is convenient if the offset value O is an effective vehicle speed offset value defined by a true vehicle speed offset value o divided by the speed sensor correction factor c:

$$(3) \qquad O \equiv o/c$$

Also for purposes of calculation, it is convenient when the display equivalent of a speed may be corrected according to other factors that scale linearly with speed if the speed increment value is an effective speed increment value I defined by:

$$(4) \qquad I \equiv i/k$$

where i is a cruise control display increment.

As described above, the constant k is most generally expressed as:

$$(5) \qquad k = c \cdot s, \text{ so} \qquad (6) \qquad I \equiv i/ (c \cdot s)$$

Using an effective speed increment I and an effective speed offset value O in this way provides a reliable method for synchronising the speed displayed on the speedometer and the set cruise control speed displayed on the cruise control digital display.

The cruise control system may be an adaptive cruise control system that is capable of controlling the vehicle speed below the adjusted cruise control speed $v_a$. The digital cruise control display then continues to display the display equivalent $v'_c$ of the desired cruise control speed when the adaptive cruise control is controlling the vehicle speed below the adjusted cruise control speed $v_a$.

Since conventional speedometers already have built within them a processor that converts a true or measured speed to the speedometer equivalent, in most systems in accordance with the invention there is no direct connection between the speedometer and the cruise control display system. However, within the scope of the invention is a combined unit which is coupled to both the speedometer and the cruise control display system.

Also according to the invention, there is provided a vehicle including a cruise control system according to the invention.

## Brief Description of the Drawings

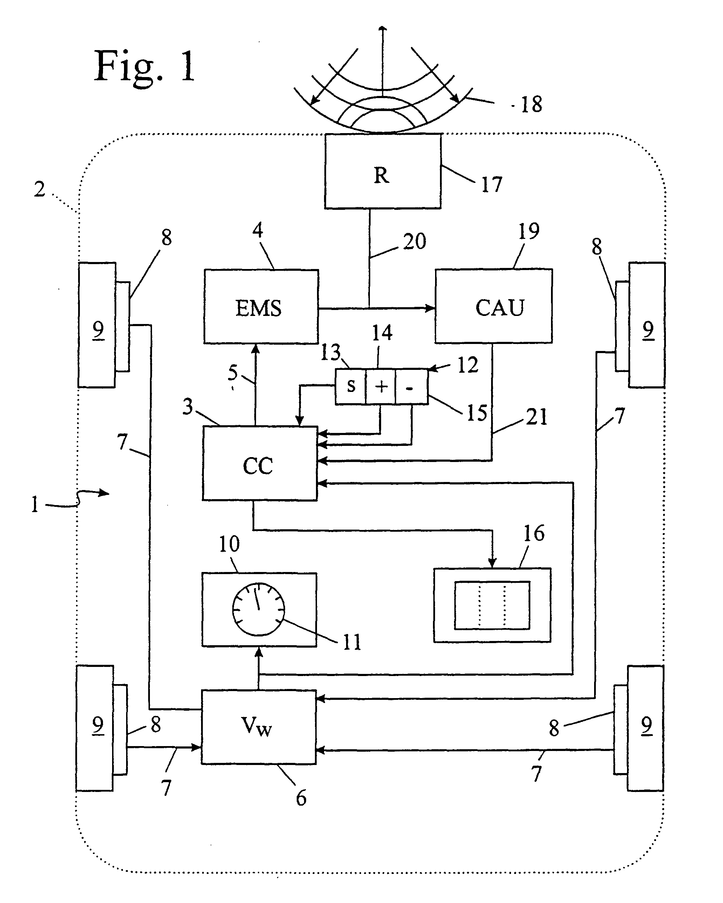

An example of a system in accordance with the invention will now be described by way of example only, with reference to the accompanying Figure 1, which is a schematic block diagram of the system.

## Detailed Description

A cruise control system 1 for a vehicle, for example a motor car 2, has a cruise controller (CC) 3 coupled to an engine management system (EMS) 4 of the vehicle 2. The engine management system 4 is operable to alter the speed of the vehicle 2 dependant upon an input 5 from the cruise controller 3.

The cruise control system 1 has a road speed measurement module 6 for generating a measure of the vehicle speed, here a measured wheel speed $v_w$ calculated from input signals 7 received from four ABS modules 8, one at each of four road wheels 9. The speed measure $v_w$ is supplied to both the cruise controller 3 and an analogue needle-type driver speedometer module 10 with a speedometer dial 11.

The vehicle 2 has a forwards directed radar transmitter/receiver (R) 17 that detects reflected radar waves 18 from a leading vehicle (not shown). A collision avoidance unit (CAU) 19 receives a signal 20 from the radar unit and provides a control output 21 to the cruise controller 3, in order to make the cruise controller 3 control the vehicle speed below a cruise control set speed when the distance or rate of change of distance to a leading vehicle indicates that the vehicle 2 is, or is about to, follow the leading vehicle too closely. The cruise control system 1 is therefore an adaptive cruise control system. When the cruise controller 3 controls the vehicle speed below the adjusted cruise control speed $v_a$, a digital cruise control display 16 linked to the cruise controller 3 continues to display a display equivalent $v'_c$ of the desired cruise control speed.

The cruise control system 1 illustrated is for use in a vehicle in Europe, requiring the cruise control system to operate in both mph and km/h. In Europe, the law requires that a speedometer must display true vehicle speed vt with a positive offset of between 0 and 4 km/h, together with a scaling factor between 100% and 110% (i.e. 1 to 1.1). This ensures that the speedometer dial 11 will be set to read at the very least a nominal or true vehicle speed $v_t$. However, to ensure that all speedometers are within the law, it is customary to use offset and scaling factors in the middle of the permitted ranges. In this example, the speed offset o to the true vehicle speed is 2 km/h, and the speedometer scaling factor s is 105% (i.e. 1.05) multiplied by the resultant offset true speed. The conversion factor used between mph and km/h is 1.6091.

The speedometer module 10 calculates a display equivalent $v'_s$ of the measured wheel speed $v_w$ consistent with the following equations. First, a true vehicle speed $v_t$ is calculated by multiplying the measured wheel speed by a tire size correction factor c:

$$(7) \qquad v_t = c \cdot v_w$$

In this example the vehicle tire size correction factor c is 1.083.

Next a speed offset value o of 2 km/h is added to $v_t$, and this sum is scaled up by a speed scaling factor s which in this example is 1.05 so that the speedometer display equivalent of the vehicle speed is:

$$(8) \qquad v'_s = (c \cdot v_w + o) \cdot s$$

It will be convenient to express this as:

$$(9) \qquad v'_s = (v_w + O) \cdot k$$

where

$$(3) \qquad O \equiv o/c \text{ and} \qquad (5) \qquad k \equiv c \cdot s$$

In this example the constant k is equal to 1.137.

A similar calculation is performed in the cruise controller 3 so that the speedometer equivalent speed display value $v'_s$ is available within the cruise controller 3.

The cruise control system 1 has driver operable controls 12 including a speed set button (S) 13, a speed increment button (+) 14 and a speed decrement button (-) 15. At the moment when the driver presses the speed set button 13 to select a desired cruising speed, the cruise controller 3 captures the speedometer equivalent display speed $v'_s$, and rounds this value for display on the digital cruise control speed display 16. In this example, the digital cruise control speed display 16 displays up to three digits with appropriate driver-selectable units, rounded to a cruise control display increment value i. In this example, i is either 1 mph or 2 km/h as the case may be. For example, if the speedometer needle display equivalent speed is 63.6 mph or 102.3 km/h, then the digital cruise control display equivalent speed will be either "64 mph" or "102 km/h". If the cruise controller 3 then controlled the speed to the initially captured cruise control speed equal to $v'_s$, then a driver may notice the discrepancy between the speedometer needle and digital cruise control display readings.

The invention avoids or minimises this problem by having the cruise controller 3 control the vehicle speed to an adjusted vehicle speed that makes the display equivalent speedometer speed agree with the display equivalent cruise control speed. This is done by calculating an adjusted cruise control speed $v_a$ defined by:

$$(1) \qquad v_a = I \cdot \text{Round}\{ (V + O)/I \} - O$$

where I is an effective cruise control display increment value defined by:

$$(4) \qquad I = i/k \qquad (5) \qquad k \equiv c \cdot s$$

Equation (1) can be derived as follows. The rounded value to be displayed on the digital cruise control speed display 16 when the cruise controller is initially set at a wheel speed $v_w$ is in this example defined by:

$$(10) \qquad v'_c \equiv i \cdot \text{Round}\{s \cdot (c \cdot v_w + o)/i\}$$

where the function "Round" is a function that rounds its argument $\{s \cdot (c \cdot v_w + o)/i\}$ to integer values.

The speedometer display equivalent speed equation (8) can be rewritten as:

$$(11) \qquad v_w = ((v'_s/s) - o)/c$$

Therefore, if the wheel speed $v_w$ is made to be an adjusted wheel speed $v_a$ that makes the speedometer equivalent speed display $v'_s$ equal to the digital cruise control equivalent speed display $v'_c$, then equation (11) can be rewritten as:

$$(12) \qquad v_a = ((v'_c/s) - o)/c$$

Substituting equation (10) into equation (12) gives:

$$(13) \qquad v_a = ((i \cdot Round\{s \cdot (c \cdot v_w + o)/i\}/s) - o)/c$$

or

$$(14) \qquad v_a = (i/s \cdot c) \cdot Round\{s \cdot (c \cdot v_w + o)/i\} - o/c$$

or

$$(15) \qquad v_a = (i/s \cdot c) \cdot Round\{(s \cdot c/i)(c \cdot v_w + o)/c\} - o/c$$

or

$$(16) \qquad v_a = (i/s \cdot c) \cdot Round\{(s \cdot c/i)(v_w + o/c)\} - o/c$$

By using equations (3) $O \equiv o/c$ and (6) $I \equiv i/(c \cdot s)$, this simplifies to:

$$(17) \qquad v_a = I \cdot Round\{(v_w + O)/I\} - O$$

which has the same form as equation (1) but with the measure of vehicle speed $V$ being here the measured wheel speed $v_w$.

Therefore, the cruise controller 3 controls the engine management system 4 so that the vehicle 2 runs at an adjusted wheel speed $v_a$ defined by equation (17), when the cruise control speed is initially set at a wheel speed of $v_w$, in order to reduce any discrepancy in the display equivalent speeds $v'_c$ and $v'_s$ of respectively the digital cruise control display 16 and speedometer display 11.

Example 1

A worked example illustrates how the cruise control system 1 operates.

At a point when the driver operates the cruise control set speed button 13 to select a cruising speed, the measure of vehicle speed given by the road speed measurement module 6 is a wheel speed $v_w = 59.4$ km/h. With an example tire size correction factor of $c = 1.083$, by equation (7) the true vehicle speed is $v_t = 64.33$ km/h. With an example display speed offset value $o = 2$ km/h and example speed scaling factor $s = 1.05$, the display equivalent speedometer needle reading is by equation (8):

$$(8) \qquad v'_s = (c \cdot v_w + o) \cdot s$$

$$v'_s = (1.083 \cdot 59.4 + 2) \cdot 1.05 = 69.647 \text{ km/h.}$$

When the driver presses the cruise control set button 13, the captured cruise control speed will be calculated from the measure of the vehicle speed, here the wheel speed $v_w$, and displayed digitally according to equation (10) using the example cruise control display increment $i = 2$, the example tire size correction factor $c = 1.083$, the example display offset value $o = 2$, and example speed scaling factor $s = 1.05$:

$$(10) \qquad v'_c = i \cdot Round\{s \cdot (c \cdot v_w + o)/i\}$$

$$v'_c = 2 \cdot Round\{1.05 \cdot (1.083 \cdot 59.4 + 2)/2\}$$

$$v'_c = 2 \cdot Round\{34.823\} = 2 \cdot 35 = 70 \text{ km/h}$$

Here, the function Round rounds its argument in steps according to half the cruise control display increment, i.e. in integer steps, with fractional values less than one-half being rounding down, and with fractional values greater than or equal to one-half being rounding up. The definition of the function Round can be different for other digital display increments.

The indicated selected cruise control speed is then about 0.3 km/h above the speedometer indicated speed.

The true or effective speed increment $I$ is calculated from equation (6) using the example cruise control display increment $i = 2$, the example tire size correction factor $c = 1.083$ and the example speed scaling factor $s = 1.05$:

$$(6) \qquad I \equiv i/(c \cdot s) = 2/(1.083 \cdot 1.05) = 1.759$$

The corrected offset $O$ is calculated from equation (3) using the example speed offset $o = 2$ and the example tire size correction factor $c = 1.083$:

$$(3) \qquad O \equiv o/c = 2/1.083 = 1.847$$

The adjusted tire speed $v_a$ can now be calculated from equation (17) using the initially selected wheel speed $v_w = 59.4$ km/h, and the above example values of $I = 1.759$ and $O = 1.847$:

$$(17) \qquad v_a = I \cdot Round\{(v_w + O)/I\} - O$$

$$v_a = 1.759 \cdot Round\{(59.4 + 1.847)/1.759\} - 1.847$$

$$v_a = 1.759 \cdot Round\{34.819\} - 1.847$$

$$v_a = 1.759 \cdot 35 - 1.847 = 59.718 \text{ km/h}$$

The function Round here has the same definition as described above in this Example.

If this adjusted wheel speed value $v_a = 59.718$ is substituted back into equation (8), it can be seen that an adjusted display equivalent speedometer speed $v'_{as}$ will be:

$$(18) \qquad v'_{as} = (c \cdot v_a + o) \cdot s$$

$$v'_{as} = (1.083 \cdot 59.718 + 2) \cdot 1.05 = 70.0 \text{ km/h}$$

which is the same speed as the digital cruise control display equivalent speed.

Therefore, once the cruise control speed is adjusted according to equation (1), any discrepancy between the displayed speedometer speed and cruise control speed is reduced or eliminated.

When the driver wishes to increment or decrement the cruise control speed he may press "n" times respectively either the speed increment button 14 or the speed decrement button 15. Each time the button 14 or 15 is pressed, the cruise controller increments the adjusted cruise control speed $v_a$ by the effective or speed increment value I. The new adjusted cruise control wheel speed $v_{an}$ is then:

$$v_{an} = v_a + n \cdot I \qquad n = \pm 1, \pm 2, \pm 3 \ldots$$

In this example, then

$$v_{an} = 59.718 \text{ km/h} + n \cdot 1.759 \text{ km/h}$$

If this new adjusted wheel speed value $v_{an}$ is substituted back into equation (10), it can be seen that a new adjusted display equivalent cruise control speed $v'_{cn}$ will be:

$$(19) \qquad v'_{cn} \equiv i \cdot \text{Round}\{s \cdot (c \cdot v_{an} + o)/i\}$$

$$v'_{cn} = i \cdot \text{Round}\{s \cdot (c \cdot (v_a + n \cdot I) + o)/i\}$$

$$v'_{cn} = 2 \cdot \text{Round}\{1.05 \cdot (1.083 \cdot (59.718 + n \cdot 1.759) + 2)/2\}$$

$$v'_{cn} = 2 \cdot \text{Round}\{0.569 \cdot (59.718 + n \cdot 1.759) + 1.05\}$$

$$v'_{cn} = 2 \cdot \text{Round}\{33.954 + n + 1.05\}$$

$$v'_{cn} = 2 \cdot \text{Round}\{35.0 + n\} = 70 + n \cdot 2$$

Therefore, the display equivalent of the cruise control digitally set speed steps up or down in multiples n of the cruise control display interval i = 2 km/h.

Similarly, if this new adjusted wheel speed value $v_{an}$ is substituted back into equation (8), it can be seen that a new adjusted display equivalent speedometer speed $v'_{asn}$ will be:

$$(18) \qquad v'_{asn} = (c \cdot v_{an} + o) \cdot s$$

$$v'_{asn} = (c \cdot (v_a + n \cdot I) + o) \cdot s$$

$$v'_{asn} = (1.083 \cdot (59.718 + n \cdot 1.759) + 2) \cdot 1.05$$

$$v'_{asn} = (1.137 \cdot (59.718 + n \cdot 1.759) + 2.1)$$

$$v'_{asn} = (67.9 + n \cdot 2) + 2.1) = 70 + n \cdot 2$$

Therefore, the cruise control system will control vehicle speed to a new adjusted display equivalent speedometer speed $v'_{asn}$ in multiples n of the cruise control display interval i = 2 km/h.

It is therefore the case that once the measure of vehicle speed is adjusted according to the invention, further increments or decrements to the vehicle speed will naturally maintain the agreement between the display equivalents of the digital cruise control display and speedometer display.

When the display speeds are in mph, further conversion calculations need to take place. Such steps will be readily apparent to the skilled addressee of the specification.

In some countries there may be other factors that need to be taken into account when converting a measure of the vehicle speed to the speed to be displayed by a speedometer. Any change to the method of calculation will be apparent to the skilled addressee of the specification, provided that the algorithm to express the adjusted cruise control speed $v_a$ can be expressed as:

$$(1) \qquad v_a = I \cdot \text{Round}\{(V + O)/I\} - O$$

**Claims**

1. A cruise control system (1) for a vehicle (2), coupled to an engine management system (3) of the vehicle (2) operable to alter the speed of the vehicle dependant upon input from the cruise control system (1), the cruise control system comprising: means (6,8) generating a measure (V) of the vehicle speed; means (3,13) by which a driver of the vehicle (2) may set a desired cruise control speed; a cruise control digital display (16) displaying to the driver a display equivalent ($v'_c$) of the desired cruise control speed that is rounded according to a speed increment value (I); a speedometer display (11) displaying to the driver a display equivalent $(v'_s)$ of the measure (V) of the vehicle speed; the display equivalent $(v'_s)$ of the measure (V) of the vehicle speed including a speed offset value (O) summed with the measure (V) of the vehicle speed; wherein the cruise control system (1) adjusts the desired cruise control speed to an adjusted cruise control speed $(v_a)$ in order to reduce any discrepancy in the display equivalent speeds $(v'_c)$ and $(v'_s)$, the adjusted cruise control speed $(v_a)$ being calculated as follows:

a) the offset (O) is added to the measure (V) of the vehicle speed, and this total is divided by the speed increment value (I) to express the measure of the vehicle speed as a multiple of the speed increment value (I);

b) said multiple is rounded according to the speed increment value (I) to give a rounded multiple; and

c) said rounded multiple is multiplied by the speed increment value (I) and the speed offset value (O) is subtracted.

2. A cruise control system (1) as claimed in Claim 1, in which the cruise control system (1) has a speed increment control (14) and/or decrement control (15) which may be activated by the driver to increment and/or decrement in steps the desired cruise control speed, the steps being such that the measure (V) of the vehicle speed is incremented and/or decremented by the speed increment value (I) when the desired cruise control speed is incremented and/or decremented by the driver.

3. A cruise control system (1) as claimed in Claim 1 or Claim 2, in which the measure (V) of the vehicle speed is a measured wheel speed value $(v_w)$.

4. A cruise control system (1) as claimed in any preceding claim, in which the display equivalent (v') of any speed is equal to a constant (k) multiplied by a sum of the measure (V) of the vehicle speed and the offset value (O).

5. A cruise control system (1) as claimed in Claim 4, in which the constant (k) is a non-unitary and non-zero value c being a speed sensor correction factor.

6. A cruise control system (1) as claimed in Claim 4, in which the constant (k) is a non-unitary and non-zero value s, the non-zero value s being a speed scaling factor.

7. A cruise control system (1) as claimed in Claim 4, in which the constant (k) is equal to a non-unitary and non-zero value c multiplied by a non-unitary and non-zero value s, the value c being a speed sensor correction factor and the value s being a speed scaling factor.

8. A cruise control system (1) as claimed in Claim 5 or Claim 7, in which the offset value (O) is an effective vehicle speed offset value defined by a true vehicle speed offset value (o) divided by the speed sensor correction factor c.

9. A cruise control system (1) as claimed in any of Claims 5 to 8, in which the speed increment value (I) is a cruise control display increment (i) divided by the constant (k).

10. A cruise control system (1) as claimed in any preceding claim, in which the cruise control system (1) is an adaptive cruise control system that is capable of controlling the vehicle speed below the adjusted cruise control speed $(v_a)$, the digital cruise control display (16) continuing to display the display equivalent $(v'_c)$ of the desired cruise control speed when the adaptive cruise control system is controlling the vehicle speed below the adjusted cruise control speed $(v_a)$.

11. A vehicle (2) including a cruise control system, the cruise control system (1) being as claimed in any preceding claim.

**Patentansprüche**

1. Ein Fahrtenregter- oder Fahrregler-System (1) für ein Fahrzeug (2), das an ein Motormanagement-System (3) des Fahrzeugs (2) gekoppelt ist, das bedienbar ist um die Geschwindigkeit des Fahrzeuges abhängig von einer Eingabe vom Fahrtenregler-System (1) her zu verändern, wobei das Fahrtenregler-System umfaßt: Vorrichtungen (6,8), die ein Maß (V) der Fahrzeuggeschwindigkeit erzeugen; Vorrichtungen (3, 13), durch welche ein Fahrer des Fahrzeugs (2) eine gewünschte Fahrtenregler-Geschwindigkeit einstellen kann; eine digitale Fahrtenregler-Anzeige (16), die dem Fahrer ein Anzeigeäquivalent $(v'_c)$ der gewünschten Fahrtenregler-Geschwindigkeit anzeigt, das gemäß eines Geschwindigkeitsinkrement-Wertes (I) gerundet ist; eine Tachometer-Anzeige (11), die dem Fahrer ein Anzeigeäquivalent $(v'_s)$ des Maßes (V) der Fahrzeuggeschwindigkeit anzeigt; wobei das Anzeigeäquivalent $(v'_s)$ des Maßes (V) der Fahrzeuggeschwindigkeit einschließlich eines Geschwindigkeitsversatz-Wertes (o) mit dem Maß (V) der Fahrzeuggeschwindigkeit summiert ist; und wobei das Fahrtenregler-System (1) die gewünschte Fahrtenregler-Geschwindigkeit auf eine angepaßte Fahrtenregler-Geschwindigkeit ($v_a$) anpaßt, um jegliche Unstimmigkeit in den Anzeigeäquivalent-Geschwindigkeiten ($v'_c$) und ($v'_s$) zu vermindern, wobei die angepaßte Fahrtenregler-Geschwindigkeit ($v_a$) wie folgt berechnet wird:

a) der Versatz (O) wird zu dem Maß (V) der Fahrzuggeschwindigkeit hinzuaddiert, und diese Summe wird durch den Geschwindigkeits-Inkrementwert (I) geteilt, um das Maß der Fahrzeuggeschwindigkeit als ein Mehrfaches des Geschwindigkeits-Inkrementwertes (I) auszudrücken;

b) dieses Vielfache wird gemäß dem Geschwindigkeits-Inkrementwert (I) gerundet, um ein gerundetes Vielfaches zu ergeben; und

c) dieses gerundete Vielfache wird mit dem Geschwindigkeits-Inkrementwert (I) multipliziert, und der Geschwindigkeits-Versatzwert (o) wird abgezogen.

2. Ein Fahrtenregler-System (1) gemäß Anspruch 1, in welchem das Fahrtenregler-System (1) eine Geschwindigkeitszunahme-Regelung (14) und oder -abnahme-Regelung (15) besitzt, welche durch den Fahrer aktiviert werden kann, um die gewünschte Fahrtenregler-Geschwindigkeit in Schritten zu erhöhen und/oder zu senken; wobei die Schritte derart sind, daß das Maß (V) der Fahrzeuggeschwindigkeit durch den Geschwindigkeits-Inkrementwert (I) erhöht und/oder gesenkt wird, wenn die gewünschte Fahrtenregler-Geschwindigkeit durch den Fahrer erhöht und/oder gesenkt wird.

3. Ein Fahrtenregler-System (1) gemäß Anspruch 1 oder Anspruch 2, in welchem das Maß (V) der Fahrzeuggeschwindigkeit ein gemessener Radgeschwindigkeits-Wert ($v_w$) ist.

4. Ein Fahrtenregler-System (1) gemäß einem der vorstehenden Ansprüche, in welchem das Anzeigeäquivalent (v') jeglicher Geschwindigkeit gleich einer Konstanten (k) multipliziert mit einer Summe des Maßes (V) der Fahrzeuggeschwindigkeit und dem Versatzwert (o) ist.

5. Ein Fahrtenregler-System (1) gemäß Anspruch 4, in welchem die Konstante (k) ein Wert c ungleich Eins und ungleich Null ist, der ein Geschwindigkeitssensor-Korrekturfaktor ist.

6. Ein Fahrtenregler-System (1) gemäß Anspruch 4, in welchem die Konstante (k) ein Wert s ungleich Eins und ungleich Null ist, wobei der Wert s ungleich Null ein Geschwindigkeits-Skalierungsfaktor ist.

7. Ein Fahrtenregler-System (1) gemäß Anspruch 4, in welchem die Konstante (k) gleich einem Wert c ungleich Eins und ungleich Null ist, multipliziert mit einem Wert s ungleich Eins und ungleich Null; wobei der Wert c ein Geschwindigkeitssensor-Korrekturfaktor ist und der Wert s ein Geschwindigkeits-Skalierungsfaktor ist.

8. Ein Fahrtenregler-System (1) gemäß Anspruch 5 oder Anspruch 7, in welchem der Versatzwert (o) ein effektiver Fahrzeuggeschwindigkeits-Versatzwert ist; definiert durch einen Versatzwert (o) der wahren Fahrzeuggeschwindigkeit, dividiert durch den Geschwindigkeitssensor-Korrekturfaktor c.

9. Ein Fahrtenregler-System (1) gemäß einem der Ansprüche 5 bis 8, in welchem der Geschwindigkeits-Inkrementwert (I) ein Fahrtenregler-Anzeigeinkrement (i) geteilt durch die Konstante (k) ist.

10. Ein Fahrtenregler-System (1) gemäß einem der vorstehenden Ansprüche, in welchem das Fahrtenregler-System (1) ein adaptives Fahrtenregler-System ist, das in der Lage ist die Fahrzeuggeschwindigkeit unterhalb der eingestellten Fahrtenregler-Geschwindigkeit ($v_a$) zu regeln; wobei die digitale Fahrtenregler-Anzeige (16) fortfährt das Anzeigeäquivalent ($v'_c$) der gewünschten Fahrtenregler-Geschwindigkeit anzuzeigen, wenn das adaptive Fahrtenregler-System die Fahrzeuggeschwindigkeit unterhalb der eingestellten Fahrtenregler-Geschwindigkeit ($v_a$) regelt.

11. Ein Fahrzeug (2) das ein Fahrtenregler-System einschließt, wobei das Fahrtenregler-System (1) gemäß einem der vorstehenden Ansprüche ist.

## Revendications

1. Système de commande de vitesse de croisière (1) destiné à un véhicule (2), couplé à un système de gestion du moteur (3) du véhicule (2) pouvant être mis en oeuvre pour modifier la vitesse du véhicule en fonction de l'entrée depuis le système de commande de vitesse de croisière (1), le système de commande de vitesse de croisière comprenant : un moyen (6, 8) générant une mesure (V) de la vitesse du véhicule, un moyen (3, 13) grâce auquel le conducteur du véhicule (2) peut établir une vitesse de commande de la vitesse de croisière désirée, un affichage numérique de commande de vitesse de croisière (16) affichant au conducteur un équivalent pour l'affichage ($v'_c$) de la vitesse de commande de vitesse de croisière désirée qui est arrondi conformément à une valeur d'incrément de vitesse (I), un affichage de compteur de vitesse (11) affichant au conducteur un équivalent pour l'affichage ($v'_s$) de la

mesure (V) de la vitesse du véhicule, l'équivalent pour l'affichage ($v'_s$) de la mesure (V) de la vitesse du véhicule comprenant une valeur de décalage de vitesse (O) sommée à la mesure (V) de la vitesse du véhicule, dans lequel le système de commande de vitesse de croisière (1) ajuste la vitesse de commande de vitesse de croisière désirée à une vitesse de commande de la vitesse de croisière ajustée ($v_a$) pour pouvoir réduire un écart quelconque des vitesses d'équivalent pour l'affichage ($v'_c$) et ($v'_s$), la vitesse de la commande de vitesse de croisière ajustée ($v_a$) étant calculée de la façon suivante :

a) le décalage (O) est ajouté à la mesure (V) de la vitesse du véhicule, et ce total est divisé par la valeur d'incrément de vitesse (I) pour exprimer la mesure de la vitesse du véhicule sous la forme d'un multiple de la valeur d'incrément de vitesse (I),
b) ledit multiple est arrondi conformément à la valeur d'incrément de vitesse (I) pour fournir un multiple arrondi, et
c) ledit multiple arrondi est multiplié par la valeur d'incrément de vitesse (I) et la valeur de décalage de vitesse (O) est soustraite.

2. Système de commande de vitesse de croisière (1) selon la revendication 1, dans lequel le système de commande de vitesse de croisière (1) comporte une commande d'incrémentation de vitesse (14) et/ou une commande de décrémentation de vitesse (15) qui peuvent être activées par le conducteur afin d'incrémenter et/ou décrémenter par pas la vitesse de la commande de vitesse de croisière désirée, les pas étant tels que la mesure (V) de la vitesse du véhicule est incrémentée et/ou décrémentée par la valeur d'incrément de vitesse (I) lorsque la vitesse de la commande de vitesse de croisière désirée est incrémentée et/ou décrémentée par le conducteur.

3. Système de commande de vitesse de croisière (1) selon la revendication 1 ou la revendication 2, dans lequel la mesure (V) de la vitesse du véhicule est une valeur de vitesse de roues mesurée ($v_w$).

4. Système de commande de vitesse de croisière (1) selon l'une quelconque des revendications précédentes, dans lequel l'équivalent pour l'affichage (v') d'une vitesse quelconque est égal à une constante (k) multipliée par la somme de la mesure (V) de la vitesse du véhicule et la valeur de décalage (O).

5. Système de commande de vitesse de croisière (1) selon la revendication 4, dans lequel la constante (k) est une valeur non unitaire et non nulle c qui est un facteur de correction de capteur de vitesse.

6. Système de commande de vitesse de croisière (1) selon la revendication 4, dans lequel la constante (k) est une valeur non unitaire et non nulle s, la valeur non nulle s étant un facteur de mise à l'échelle de vitesse.

7. Système de commande de vitesse de croisière (1), selon la revendication 4, dans lequel la constante (k) est égale à une valeur non unitaire et non nulle c multipliée par une valeur non unitaire et non nulle s, la valeur c étant un facteur de correction de capteur de vitesse et la valeur s étant un facteur de mise à l'échelle de vitesse.

8. Système de commande de vitesse de croisière (1) selon la revendication 5 ou la revendication 7, dans lequel la valeur de décalage (O) est une valeur de décalage de vitesse de véhicule efficace définie par une vraie valeur de décalage de vitesse de véhicule (o) divisée par le facteur de correction de capteur de vitesse c.

9. Système de commande de vitesse de croisière (1) selon l'une quelconque des revendications 5 à 8, dans lequel la valeur d'incrément de vitesse (I) est un incrément d'affichage de commande de vitesse de croisière (I) divisé par la constante (k).

10. Système de commande de vitesse de croisière (1) selon l'une quelconque des revendications précédentes, dans lequel un système de commande de vitesse de croisière (1) est un système de commande de vitesse de croisière adaptatif qui permet de commander la vitesse du véhicule en dessous de la vitesse de la commande de vitesse de croisière ajustée ($v_a$), l'affichage de commande de vitesse de croisière numérique (16) continuant à afficher l'équivalent pour l'affichage ($v'_c$) de la vitesse de la commande de vitesse de croisière désirée lorsque le système de commande de vitesse de croisière adaptatif commande la vitesse du véhicule en dessous de la vitesse de la commande de vitesse de croisière ajustée ($v_a$).

11. Véhicule (2) comprenant un système de commande de vitesse de croisière, le système de commande de vitesse de croisière (1) étant selon l'une quelconque des revendications précédentes.

# Fig. 1